# EUROPEAN PATENT SPECIFICATION

(11) **EP 4 199 137 B1**
(45) Date of publication and mention of the grant of the patent: **18.12.2024**
(21) Application number: 22213491.8
(22) Date of filing: 14.12.2022
(51) Int. Cl.: H01M 4/04, H01M 4/36, H01M 4/38, H01M 4/583, H01M 10/052, H01M 50/105, H01M 4/02

(54) **ANODE FOR SECONDARY BATTERY, METHOD OF FABRICATING THE SAME AND LITHIUM SECONDARY BATTERY INCLUDING THE SAME**
ANODE FÜR SEKUNDÄRBATTERIE, VERFAHREN ZUR HERSTELLUNG DAVON UND LITHIUMSEKUNDÄRBATTERIE DAMIT
ANODE POUR BATTERIE SECONDAIRE, SON PROCÉDÉ DE FABRICATION ET BATTERIE SECONDAIRE AU LITHIUM LA COMPRENANT

(30) Priority: 15.12.2021 KR 20210179924
(43) Date of publication of application: 21.06.2023
(73) Proprietor: SK On Co., Ltd., Seoul 03161 (KR)
(72) Inventor: MOON, Joon Hyung, 34124 Daejeon (KR); PARK, Gwi Ok, 34124 Daejeon (KR); CHUNG, Ju Ho, 34124 Daejeon (KR); YOO, Seok Keun, 34124 Daejeon (KR)
(74) Representative: Bird & Bird LLP

(56) References cited:
- US-B2- 10 700 346
- LEE CHAO-YU ET AL: "A Commercial Carbonaceous Anode with a-Si Layers by Plasma Enhanced Chemical Vapor Deposition for Lithium Ion Batteries", JOURNAL OF COMPOSITES SCIENCE, vol. 4, no. 2, 11 June 2020 (2020-06-11), pages 72, XP093037306, DOI: 10.3390/jcs4020072
- M. HOLZAPFEL ET AL: "A Commercial Carbonaceous Anode with a-Si Layers by Plasma Enhanced Chemical Vapor Deposition for Lithium Ion Batteries", ELECTROCHEMICAL AND SOLID-STATE LETTERS, vol. 8, no. 10, 12 August 2005 (2005-08-12), pages A516 - A520, XP055024467, ISSN: 1099-0062, DOI: 10.1149/1.2030448

## Description

### BACKGROUND

### 1. Field

The present invention relates to an anode for a secondary battery, a method of fabricating the same, and a lithium secondary battery including the same. More particularly, the present invention relates to an anode for a secondary battery including a composite active material, a method of fabricating the same, and a lithium secondary battery including the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle. etc.

The secondary battery includes, e.g., a lithium secondary battery, a nickelcadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

A graphite-based material may be used as an anode active material of the anode. However, as demands for lithium secondary batteries of high capacity/high power has been recently increased, a silicon-based material has been introduced as the anode active material.

However, the silicon-based material may cause side reactions with moisture, air, etc., and may cause contraction/expansion according to repeated charging/discharging.

Therefore, developments of an anode active material capable of providing high capacity while also providing sufficient life-span properties and operational stability are required.

For example, Korean Registered Patent Publication No. 10-1057162 discloses a metal-carbon composite anode active material for improving cycle properties.

### SUMMARY

According to an aspect of the present invention, there is provided an anode for a secondary battery having improved capacity property and stability.

According to an aspect of the present invention, there is provided a method of fabricating an anode for a secondary battery having improved capacity property and stability.

According to an aspect of the present invention, there is provided a lithium secondary battery including an anode for a secondary battery with improved capacity property and stability.

An anode for a lithium secondary battery includes an anode current collector, and an anode active material layer formed on the anode current collector, the anode active material layer including carbon-based active material particles and a silicon coating formed on surfaces of the carbon-based active material particles. A surface content of silicon of the anode active material layer measured by an X-ray photoelectric spectroscopy (XPS) is in a range from 3 atom% to 25 atom%. A peak intensity ratio defined as a ratio of a second peak intensity corresponding to a peak intensity at a binding energy in a range from 102 eV to 106 eV relative to a first peak intensity corresponding to a peak intensity at a binding energy in a range from 98 eV to 102 eV is in a range from 0.05 to 1.

In some embodiments, a surface content of silicon of the anode active material layer measured by the XPS may be in a range from 3 atom% to 11 atom%.

In some embodiments, the carbon-based active material particles may form a porous carbon scaffold.

In some embodiments, the carbon-based active material particles may include a blend of artificial graphite and natural graphite.

In some embodiments, an amount of silicon at an outer surface of the anode active material layer may be greater than an amount of silicon at an inside of the anode active material layer.

In some embodiments, the carbon-based active material particles may be stacked in the anode active material layer so that surfaces of carbon-based active material particles may contact each other.

In some embodiments, the silicon coating may be discontinuously formed on the surfaces of the carbon-based active material particles.

In some embodiments, the first peak intensity may be a Si peak intensity, and the second peak intensity may be a Si—O peak intensity.

In some embodiments, a lithium secondary battery includes a cathode including lithium-transition metal composite oxide particles as a cathode active material, and the anode according to the above-described embodiments facing the cathode.

In a method of fabricating an anode for a secondary battery, a preliminary anode active material layer is formed by coating an anode slurry that includes carbon-based active material particles on an anode current collector. A deposition gas containing a silicon source is supplied on the preliminary anode active material layer to form a silicon coating on surfaces of the carbon-based active material particles.

In some embodiments, a ratio of the silicon source in the deposition gas may be in a range from 3 vol% to 22 vol%.

In some embodiments, the silicon coating may be formed by a chemical vapor deposition (CVD) process, and the silicon source may include SiH₄.

In some embodiments, the anode slurry may further include a solvent, a binder and a carbon-based conductive material.

In some embodiments, in the formation of the preliminary anode active material layer, the coated anode slurry may be dried and pressed before forming the silicon coating.

In some embodiments, a surface content of silicon of the anode active material layer measured by an X-ray photoelectric spectroscopy (XPS) may be in a range from 3 atom% to 25 atom%. A peak intensity ratio defined as a ratio of a second peak intensity corresponding to a peak intensity at a binding energy in a range from 102 eV to 106 eV relative to a first peak intensity corresponding to a peak intensity at a binding energy in a range from 98 eV to 102 eV may be in a range from 0.05 to 1.

According to embodiments of the present invention, an anode for a secondary battery manufactured according to the above-described method is provided. Further, a lithium secondary battery including the anode is provided.

According to embodiments of the present invention, a preliminary anode active material layer including carbon-based active material particles is formed on an anode current collector, and then a silicon coating is formed on surfaces of the carbon-based active material particles by a dry deposition process. The silicon coating is formed after a coating process of an anode active material layer, so that generation of gas due to a side reaction with a solvent and oxidation of silicon that may be caused in an anode slurry may be suppressed. Additionally, capacity and energy density of an anode may be enhanced by the silicon coating while maintaining conductivity of the carbon-based active material.

According to embodiments of the present invention, the anode active material layer may have a Si content and a ratio between a Si peak and a Si—O peak measured from an X-ray photoelectric spectrum (XPS) adjusted within a predetermined range. Accordingly, sufficient capacity properties may be achieved while reducing gas generation and an anode resistance in an anode formation process.

### BRIEF DESCRIPTION OF THE DRAWINGS

FIG. 1 is a schematic cross-sectional view illustrating an anode for a secondary battery according to exemplary embodiments.
FIGS. 2 and 3 are schematic cross-sectional views for explaining a method of fabricating an anode for a secondary battery according to exemplary embodiments.
FIGS. 4 and 5 are a schematic plan view and a schematic cross-sectional view, respectively, illustrating a lithium secondary battery according to exemplary embodiments.
FIG. 6 is an X-ray photoelectric spectroscopy (XPS) analysis graph in anode active material layers of Example and Comparative Examples.

### DETAILED DESCRIPTION OF THE EMBODIMENTS

According to embodiments of the present invention, an anode including an anode active material layer in which a carbon-based material and a silicon-based material are combined and a method for fabricating the anode are provided. Further, a lithium secondary battery including the anode is provided.

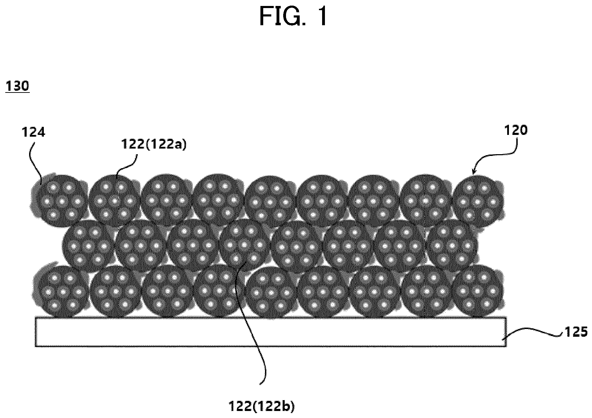

FIG. 1 is a schematic cross-sectional view illustrating an anode for a secondary battery according to exemplary embodiments.

For convenience of descriptions, an anode active material included in an anode active material layer 120 is only illustrated in FIG. 1, and detailed illustrations of other components such as a binder and a conductive material included in the anode active material layer 120 are omitted.

Referring to FIG. 1, an anode 130 includes an anode current collector 125, and the anode active material layer 120 formed by coating the anode active material on the anode current collector 125.

The anode current collector 125 may include gold, stainless steel, nickel, aluminum, titanium, copper or an alloy thereof, preferably may include copper or a copper alloy.

The anode active material layer 120 may be formed on at least one surface of the anode current collector 125. As illustrate in FIG. 1, the anode active material layer 120 may be formed on one surface of the anode current collector 125. In some embodiments, the anode active material layer 120 may be formed on the one surface and the other surface opposite to the one surface of the anode current collector 125. The anode active material layer 120 may directly contact the surface of the anode current collector 125.

The anode active material layer 120 may include carbon-based active material particles 122 and a silicon coating 124 formed on the carbon-based active material particles 122. Accordingly, the anode active material layer 120 may include carbon-silicon composite particles.

The carbon-based active material particles 122 may include crystalline carbon and may have a porous structure. In some embodiments, the carbon-based active material particles 122 may include porous graphite particles.

The carbon-based active material particles 122 may include natural graphite and/or artificial graphite. Preferably, the carbon-based active material particles 122 may include a blend of natural graphite particles and artificial graphite particles.

In an embodiment, a weight of the artificial graphite particles in the carbon-based active material particles 122 may be greater than or equal to a weight of the natural graphite particles. Preferably, the weight of the artificial graphite particles may be greater than the weight of the natural graphite particles. In this case, life-span properties and operational stability of the anode 130 may be improved by the artificial graphite particles having relatively improved chemical and mechanical stability.

For example, a weight ratio of the artificial graphite particles relative to the natural graphite particles may be in a range from 1 to 10, preferably from 1.5 to 10, more preferably from 2.5 to 10.

In some embodiments, the carbon-based active material particles 122 may include porous carbonaceous particles such as graphitized or carbonized resin particles, an activated carbon, etc.

The silicon coating 124 contains silicon (Si) and may be formed on at least a portion of the surface of the carbon-based active material particle 122.

As illustrated in FIG. 1, the carbon-based active material particles 122 may have a porous structure including pores therein, and the silicon coating 124 may also be formed on inner surfaces of the pores.

In some embodiments, the silicon coating 124 may be formed in the form of an island locally formed on an outer surface of the carbon-based active material particle 122. For example, a plurality of silicon coating islands may be spaced apart and distributed on the outer surface of one carbon-based active material particle 122.

Accordingly, the outer surfaces of the adjacent carbon-based active material particles 122 may be in contact with each other, and the silicon coating 124 may be discontinuously distributed on the outer surfaces of the carbon-based active material particles 122.

In some embodiments, an amount of the silicon coating 124 formed on the carbon-based active material particles 122 (e.g., first carbon-based active material particles 122a) exposed on an outer surface of the anode active material layer 120 may be greater than an amount of the silicon coating 124 formed on the carbon-based active material particles 122 (the second carbon-based active material particles 122b) included at an inside of the anode active material layer 120.

As described above, carbon-silicon composite particles in which the carbon-based active material particles 122 and the silicon coating 124 are combined or integrated may be used as the anode active material. A silicon-based active material may be included as the partial silicon coating 124, so that excessive contraction/expansion and chemical instability caused by the silicon-based active material may be suppressed while achieving high capacity/energy density properties of the silicon-based active material.

For example, the carbon-based active material particles 122 may contact each other to provide a backbone structure of the anode active material layer 120, so that expansion/contraction of the anode caused by the silicon coating 124 may be prevented or reduced. For example, the carbon-based active material particles 122 may form a porous scaffold.

As described above, a relatively large number of the silicon coating 124 may be formed on the first carbon-based active material particles 122a provided as outer surface particles. Therefore, a sufficient capacity improvement effect through the silicon-based active material may be implemented on the outer surface of the anode active material layer 120, and chemical and mechanical stability may be enhanced at the inside of the anode active material layer 120.

Additionally, the contact of the carbon-based active material particles 122 may be maintained at the inside of the anode active material layer 120. Accordingly, a resistance increase of the anode active material layer 120 due to the silicon coating 124 may be suppressed, and power properties from the anode 130 may also be improved.

In exemplary embodiments, a content of silicon (Si) on the surface of the anode active material layer 120 measured by an X-ray photoelectric spectrum (XPS) may be in a range from 3 atom% to 25 atom%.

For example, the surface silicon content may be measured using an intensity of Si-containing peaks in the XPS.

For example, if the silicon content on the surface of the anode active material layer 120 is less than 3 atom%, a sufficient capacity enhancement through the silicon-based active material may not be obtained. If the silicon content on the surface of the anode active material layer 120 exceeds 25 atom%, stability of the anode active material layer 120 may be excessively degraded, thereby deteriorating life-span properties of the secondary battery.

In an embodiment, the silicon content on the surface of the anode active material layer 120 may be in a range from 3 atom% to 11 atom%, preferably from 3 atom% to 8 atom%, more preferably from 3 atom% to 6 atom%, or from 3.5 atom% to 6 atom%.

In exemplary embodiments, a ratio of a second peak intensity corresponding to a peak intensity (a maximum peak intensity) at a binding energy ranging from 102 eV to 106 eV relative to a first peak intensity corresponding to a peak intensity at a binding energy ranging from 98 eV to 102 eV in the XPS of the anode active material layer 120 (hereinafter, which may be abbreviated as a peak intensity ratio) may be in a range from 0.05 to 1.

The first peak intensity may be a peak corresponding to a silicon element (Si). The second peak intensity may be an intensity of a peak corresponding to a Si—O.

Thus, an intensity of the Si-O may be is suppressed in the range of the peak intensity ratio, so that a decrease of a conductivity and an initial efficiency of the anode 130 due to an oxidation of the silicon-based active material may be suppressed. For example, if the peak intensity ratio exceeds 1, a resistance of the anode 130 may be excessively increased, and capacity enhancement by employing the silicon-based active material may not be sufficiently implemented.

For example, if the peak intensity ratio is less than 0.05, a sufficient amount of the silicon coating may not be achieved.

In an embodiment, the peak intensity ratio may be in a range from 0.05 to 0.9, preferably from 0.05 to 0.85, or from 0.1 to 0.8.

As described above, the silicon content on the surface of the anode active material layer 120 and the ratio of the Si—O component may be controlled in the silicon coating 124, so that a substantial increase of capacity/efficiency from the introduction of the silicon-based active material may be realized. Further, the resistance increase due to the introduction of the silicon-based active material may be prevented to achieve sufficient conductivity and power.

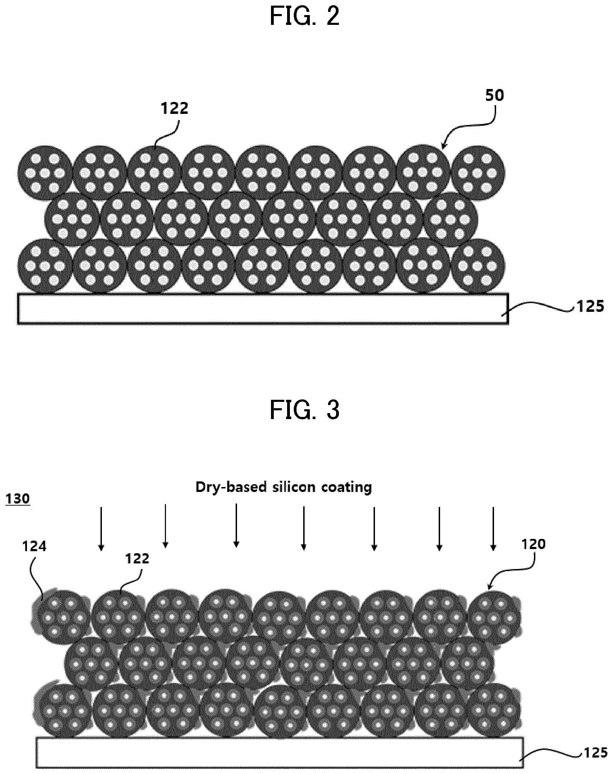

FIGS. 2 and 3 are schematic cross-sectional views for explaining a method of fabricating an anode for a secondary battery according to exemplary embodiments.

Referring to FIG. 2, a preliminary anode active material layer 50 may be formed on an anode current collector 125.

In exemplary embodiments, an anode slurry including the carbon-based active material particles 122 as described above may be formed, and the anode slurry may be coated on a surface of the anode current collector 125 to form a preliminary coating layer. Thereafter, the preliminary coating layer may be dried and pressed to form the preliminary anode active material layer 50.

The anode slurry may be formed by dissolving the carbon-based active material particles 122 together with an anode binder in a solvent (e.g., water). In some embodiments, a conductive material may be further included in the anode slurry, and an additional component such as a dispersive agent may be further included.

In some embodiments, the binder may include, e.g., a styrene-butadiene rubber (SBR)-based material, and may be used together with a thickener such as carboxymethyl cellulose (CMC). In some embodiments, the conductive material may include a carbon-based conductive material such as carbon nanotube, carbon black, Super P, etc.

Referring to FIG. 3, a silicon coating 124 may be formed on the preliminary anode active material layer 50 by a dry process. Accordingly, the anode active material layer 120 including a carbon-silicon composite active material may be formed.

In exemplary embodiments, a silicon source may be supplied on the surface of the preliminary anode active material layer 50 by a chemical vapor deposition (CVD) process to from the silicon coating 124. For example, the silicon source may include a silane-based gas (e.g., SiH₄).

In some embodiments, the silicon source may be mixed with a carrier gas to form a deposition gas. The carrier gas may include an inert gas such as nitrogen (N₂), helium, argon, etc.

A molar ratio of the silicon source in the deposition gas may be adjusted to control an amount of the silicon coating 124.

In some embodiments, a concentration (or volume ratio) of the silicon source (e.g., silane (SiH₄)) may be in a range from 3 volume percents (vol%) to 22 vol%, preferably from 4 vol% to 20 vol%, more preferably from 4 vol% to 15 vol%.

Within the above range, the surface content of silicon and the peak intensity ratio on the anode active material layer 120 may be effectively implemented.

As described above, the preliminary anode active material layer 50 having the form of the porous carbon scaffold may be fixed on the anode current collector 125 in advance, and then the silicon coating 124 may be formed by the deposition process.

Accordingly, mechanical instability such as a poor adhesion of the anode active material layer 120, and a peel-off from the anode current collector 125 due to contraction/expansion of the silicon-based active material may be reduced.

In a comparative example, the silicon source may be included in the anode slurry to form a silicon coating on the carbon-based active material particles 122. In the comparative example, hydrogen (H₂) gas may be generated by being reacted with the solvent and silicon, and thus a battery explosion due to a pressure increase may be caused.

Further, silicon may be oxidized to increase a formation of a silicon oxide layer. Accordingly, a resistance of the anode active material layer 120 may be increased, and sufficient capacity increase by the introduction of the silicon-based active material may not be implemented

However, according to embodiments of the present invention, a network of carbon-based active material particles 122 may be formed from the preliminary anode active material layer 50, and then the silicon coating 124 may be formed. Accordingly, an ion conductive path in the anode active material layer 120 may be substantially maintained, and the resistance increase in the anode 130 due to the introduction of the silicon-based active material may be prevented.

Additionally, a relatively large amount of the silicon coating 124 may be distributed on the surface of the anode active material layer 120. Thus, the ion conductive path in the anode active material layer 120 may be more effectively achieved, and expansion of the anode 130 may be suppressed.

According to exemplary embodiments, the silicon coating 124 may be formed by a dry deposition process, so that a side reaction with the solvent and a degradation of dispersibility of the anode slurry due to the silicon source may be avoided. Thus, the uniform anode active material layer 120 having stable chemical and electrical properties may be formed.

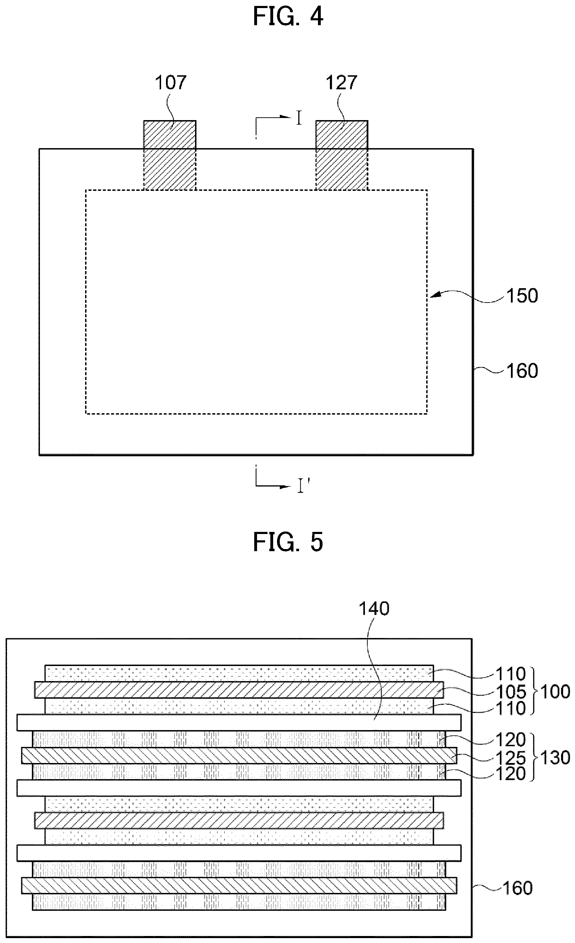

FIGS. 4 and 5 are a schematic plan view and a cross-sectional view, respectively, illustrating a lithium secondary battery according to exemplary embodiments. For example, FIG. 5 is a cross-sectional view taken along a line I-I' of FIG. 4 in a thickness direction. Detailed descriptions of elements and structures of the cathode 130 described with reference to FIGS. 1 to 3 are omitted herein.

Referring to FIGS. 4 and 5, a lithium secondary battery includes a cathode 100 and the anode 130 according to the above-described exemplary embodiments, and may further include a separation layer 140 interposed between the cathode 100 and the anode 130.

The cathode 100 may include a cathode active material layer 110 formed by coating a cathode active material on a cathode current collector 105. The cathode active material may include a compound capable of reversibly intercalating and de-intercalating lithium ions.

In exemplary embodiments, the cathode active material may include lithium-transition metal composite oxide particles. For example, the lithium-transition metal composite oxide particles may include nickel (Ni), and may further include at least one of cobalt (Co) and manganese (Mn).

For example, the lithium-transition metal composite oxide particles may be represented by Chemical Formula 1 below.

[Chemical Formula 1] LiₓNi_{1-y}M_{y}O_{2+z}

In Chemical Formula 1, 0.9≤x≤1.1, 0≤y≤0.7 and -0.1≤z≤0.1. M may represent at least one element selected from Na, Mg, Ca, Y, Ti, Zr, Hf, V, Nb, Ta, Cr, Mo, W, Mn, Co, Fe, Cu, Ag, Zn, B, Al, Ga, C, Si, Sn and Zr.

In some embodiments, a molar ratio or a concentration (1-y) of Ni in Chemical Formula 1 may be 0.8 or more, and may exceed 0.8 in a preferable embodiment. In an embodiment, the molar ratio of Ni may be, e.g., 0.83 or more, 0.85 or more, 0.88 or more, or 0.9 or more.

Ni may serve as a transition metal related to power and capacity of the lithium secondary battery. Thus, as described above, the high-Ni composition in the lithium-transition metal composite oxide particles may be employed, so that the cathode and the lithium secondary battery of high power may be implemented.

However, as the content of Ni increases, long-term storage and life-span stability of the cathode or secondary battery may be relatively degraded. However, according to exemplary embodiments, the life-span stability and capacity retention properties may be improved using Mn while maintaining an electrical conductivity by including Co.

In some embodiments, the cathode active material or the lithium-transition metal composite oxide particles may further include a coating element or a doping element. For example, the coating element or the doping element may include Al, Ti, Ba, Zr, Si, B, Mg, P, W, V, an alloy thereof, or an oxide thereof. These may be used alone or in combination thereof. The cathode active material particles may be protected by the coating or doping element, so that the stability against penetration of an external object and the life-span properties may be further improved.

A slurry may be prepared by mixing and stirring the cathode active material with a binder, a conductive material and/or a dispersive agent in a solvent. The slurry may be coated on the cathode current collector 105, and then dried and pressed to form the cathode 100.

The cathode current collector 105 may include, e.g., stainless steel, nickel, aluminum, titanium, copper, or an alloy thereof, preferably may include aluminum or an aluminum alloy.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material or lithium metal oxide particles may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without a loss by, e.g., precipitation or sedimentation to further improve power and capacity of the secondary battery.

In exemplary embodiments, an electrode cell may be defined by the cathode 100, the anode 130 and the separation layer 140, and a plurality of the electrode cells may be stacked to form an electrode assembly 150 that may have e.g., a jelly roll shape. For example, the electrode assembly 150 may be formed by winding, laminating or folding the separation layer 140.

The electrode assembly 150 may be accommodated together with an electrolyte in a case 160 to define the lithium secondary battery. In exemplary embodiments, a non-aqueous electrolyte may be used as the electrolyte.

The non-aqueous electrolyte solution may include a lithium salt and an organic solvent. The lithium salt may be represented by Li⁺X⁻ , and an anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more therefrom.

As illustrated in FIG. 4, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

FIG. 4 illustrates that the cathode lead 107 and the anode lead 127 are positioned at the same side of the lithium secondary battery or the case 160, but the positions of the electrode leads are not limited thereto. For example, the cathode lead 107 and the anode lead 127 may protrude from at least one of both lateral sides of the case 160, or may protrude from a lower side of the case 160. For example, the cathode lead 107 and the anode lead 127 may be formed to protrude from different sides of the case 160.

The lithium secondary battery may be manufactured in, e.g., a cylindrical shape using a can, a square shape, a pouch shape or a coin shape.

### Examples and Comparative Examples

### Example 1

### 1) Fabrication of anode

24 wt% of natural graphite, 70 wt% of artificial graphite, 1 wt% of carboxymethyl cellulose (CMC), 4 wt% of styrene butadiene rubber, and 1 wt% of a conductive material (CNT) were mixed in distilled water to prepare an anode slurry. The anode slurry was coated on a Cu foil current collector, dried and pressed to form a preliminary anode active material layer including carbon-based active material particles.

The anode including the preliminary anode active material layer was loaded into a chamber and treated at 500 °C for 90 minutes in 5 vol% SiH₄ deposition gas mixed with nitrogen gas. Accordingly, an anode active material layer having a silicon coating was formed.

### 2) Fabrication of coin half cell

The anode fabricated as described in the above 1) and a lithium foil as a counter electrode were used. A PE separator was interposed between the anode and the counter electrode, and then an electrolyte was injected to prepare a coin cell. The assembled coin cell was maintained at room temperature for 3 to 24 hours. The electrolyte was prepared by mixing 2 vol% of FEC as an electrolyte additive in a lithium salt 1.0M LiPF₆ solution (solvent: EC and EMC mixed solvent, mixing ratio 3 vol%:7 vol%).

### Examples 2 to 4 and Comparative Examples 1 to 2

A coin cell was fabricated by the same method as that in Example 1, except that the concentration of SiH₄ was changed as shown in Table 1.

### Comparative Example 3

A coin cell was fabricated by the same method as that in Example 1, except that silicon coating (SiH₄ deposition) was omitted.

### Comparative Example 4

### 1) Fabrication of anode

24 wt% of natural graphite and 70 wt% of artificial graphite were evenly mixed, and then heat-treated at 500 °C for 90 minutes in an atmosphere of 5 vol% SiH₄ gas mixed with nitrogen gas. A carbon-silicon composite was prepared as an anode active material by collecting and pulverizing the heat-treated powder.

94 wt% of the carbon-silicon composite as an anode active material, 1 wt% of carboxymethyl cellulose, 4 wt% of styrene butadiene rubber, and 1 wt% of a conductive material (CNT) were mixed in distilled water to prepare an anode slurry. The anode slurry was coated on a Cu foil current collector, dried and pressed to prepare aa anode.

### 2) Fabrication of coin half cell

The anode fabricated as described in the above 1) and a lithium foil as a counter electrode were used. A PE separator was interposed between the anode and the counter electrode, and then an electrolyte was injected to prepare a coin cell. The assembled coin cell was maintained at room temperature for 3 to 24 hours. The electrolyte was prepared by mixing 2 vol% of FEC as an electrolyte additive in a lithium salt 1.0M LiPF₆ solution (solvent: EC and EMC mixed solvent, mixing ratio 3 vol%:7 vol%).

### Comparative Example 5

A coin cell was fabricated by the same method as that in Comparative Example 4, except that the concentration of SiH₄ was changed as shown in Table 1.

### Experimental Example

### 1) XPS analysis

The anode prepared in Examples and Comparative Examples was attached to a carbon tape to prepare a sample, and an XPS analysis was performed under the following conditions to measure a surface content of silicon surface and a peak intensity ratio (Si-O/Si).
i) X-ray : Al k alpha, 1486.68 eV, 900um Beam size
ii) Analyzer: CAE Mode
iii) Number of scans: 2 (survey scan), 20 (narrow scan)
iv) Pass energy: 150eV (survey scan), 20eV (narrow scan)
v) Ion gun: Ar ion
vi) Ion energy: 4000 eV

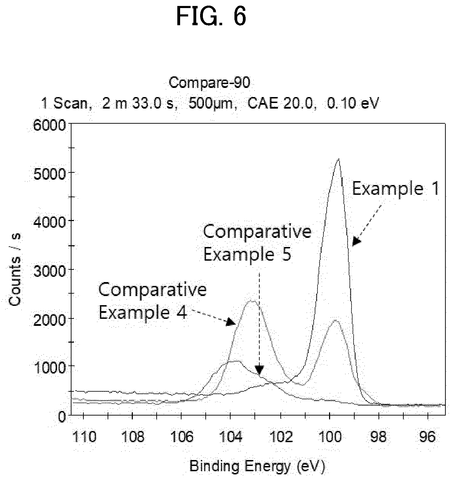

FIG. 6 is an X-ray photoelectric spectrum (XPS) analysis graph in anode active material layers of Example 1 and Comparative Examples 4 and 5.

Referring to FIG. 6, in Comparative Examples where the silicon coating was formed before the formation of the slurry, the Si—O ratio was increased while the surface Si content was reduced.

### 2) Measurement of slurry gas generation

4 mL of the anode slurry used in Examples and Comparative Examples was injected into a gas tight syringe, and an inlet was sealed and left at room temperature for 7 days. Thereafter, a slurry gas generation rate was calculated by Equation 1 below.Slurry gas generation rate = (a slurry volume after 7 days - an initial slurry volume)/(an initial slurry volume)

### 3) Evaluation of charging and discharging property

The coin cell of Examples and Comparative Examples was charged with a constant current at room temperature (25 °C) at a current of 0.1C rate until the voltage reached 0.01V, and then charged with a constant voltage while maintaining 0.01V in a constant voltage mode and cut-off at a current of 0.01C rate.

Thereafter, the battery was discharged at a constant current of 0.1C rate until the voltage reached 1.5V. The charging and discharging were performed as one cycle. The one cycle was further by the same method, and 50 cycles were performed by changing an applied current to 0.5C during the charging and discharging with a 10 minute rest period between the cycles.

The charge/discharge efficiency (%) (an initial discharge capacity/an initial charge capacity) and a discharge capacity of the first cycle among the 50 cycles were designated as an initial efficiency and an initial discharge capacity, respectively, and the capacity retention at the 50th cycle compared to the initial discharge capacity was calculated.

### 4) Electrode resistance

An interfacial resistance of the anodes prepared in Examples and Comparative Examples was measured under conditions of a current 10mA and a voltage range 0.5V using HIOKI XF057 PROBE UNIT equipment

The evaluation results are shown in Table 1 below.

**[Table 1]**

| | SiH₄ concentration (vol%) | XPS surface Si (atom%) | XPS peak intensity ratio (Si-O/Si) | slurry gas generation | initial capacity (mAh/g) | initial efficiency (%) | capacity retention (%) | electrode resistance (Ω/cm²) |
|---|---|---|---|---|---|---|---|---|
| Example 1 | 5 | 3.6 | 0.1 | - | 592 | 93.7 | 90 | 0.008 |
| Example 2 | 10 | 6.0 | 0.25 | - | 620 | 93.3 | 90 | 0.015 |
| Example 3 | 15 | 10.4 | 0.54 | - | 651 | 93.4 | 89 | 0.017 |
| Example 4 | 20 | 23.8 | 0.81 | - | 702 | 92.9 | 85 | 0.016 |
| Comparative Example 1 | 25 | 30.9 | 0.82 | - | 840 | 91.4 | 68 | 0.018 |
| Comparative Example 2 | 2 | 2.1 | 0.54 | - | 404 | 93.4 | 92 | 0.008 |
| Comparative Example 3 | 0 | 0 | - | - | 350 | 94.1 | 93 | 0.007 |
| Comparative Example 4 | 5 | 0.6 | 1.3 | 30% | 594 | 91.7 | 88 | 0.035 |
| Comparative Example 5 | 2 | 0.3 | 2.5 | 23% | 423 | 92.2 | 90 | 0.032 |

Referring to Table 1, improved initial capacity/efficiency and capacity retention were obtained in Examples satisfying the surface Si content and peak intensity ratio (Si-O/Si) measured by the XPS, while the gas generation and electrode resistance were reduced.

In Comparative Examples 4 and 5 where the silicon coating was included in the anode slurry, the gas generation was increased due to a side reaction with water, and the electrode resistance was also increased due to an increase of a Si-O ratio.

## Claims

1. An anode for a lithium secondary battery, comprising:
an anode current collector; and
an anode active material layer formed on the anode current collector, the anode active material layer comprising carbon-based active material particles and a silicon coating formed on surfaces of the carbon-based active material particles,
wherein a surface content of silicon of the anode active material layer measured by an X-ray photoelectric spectroscopy (XPS) is in a range from 3 atom% to 25 atom%, and
a peak intensity ratio defined as a ratio of a second peak intensity corresponding to a peak intensity at a binding energy in a range from 102 eV to 106 eV relative to a first peak intensity corresponding to a peak intensity at a binding energy in a range from 98 eV to 102 eV is in a range from 0.05 to 1,
wherein the first peak intensity is a Si peak intensity, and the second peak intensity is a Si-O peak measured according to the description.

2. The anode for a lithium secondary battery according to claim 1, wherein a surface content of silicon of the anode active material layer measured by the XPS is in a range from 3 atom% to 11 atom%.

3. The anode for a lithium secondary battery according to any one of claims 1 and 2, wherein the carbon-based active material particles are stacked in the anode active material layer so that surfaces of carbon-based active material particles contact each other, and the carbon-based active material particles form a porous carbon scaffold.

4. The anode for a lithium secondary battery according to any one of claims 1 to 3, wherein the carbon-based active material particles comprise a blend of artificial graphite and natural graphite.

5. The anode for a lithium secondary battery according to any one of claims 1 to 4, wherein an amount of silicon coating formed on the carbon-based active material particles exposed on an outer surface of the anode active material layer is greater than an amount of silicon coating formed on the carbon-based active material particles exposed on an inside of the anode active material layer.

6. The anode for a lithium secondary battery according to any one of claims 1 to 5, wherein the silicon coating is discontinuously formed on the surfaces of the carbon-based active material particles.

7. A lithium secondary battery, comprising:
a cathode comprising lithium-transition metal composite oxide particles as a cathode active material; and
the anode according to any one of claims 1 to 6 facing the cathode.

8. A method of fabricating an anode for a secondary battery, comprising:
forming a preliminary anode active material layer by coating an anode slurry that comprises carbon-based active material particles on an anode current collector; and
supplying a deposition gas containing a silicon source on the preliminary anode active material layer to form a silicon coating on surfaces of the carbon-based active material particles, wherein a ratio of the silicon source in the deposition gas is in a range from 3 vol% to 22 vol%.

9. The method according to claim 8, wherein the silicon coating is formed by a chemical vapor deposition (CVD) process, and the silicon source comprises SiH₄.

10. The method according to any one of claims 8 and 9, wherein the anode slurry further comprises a solvent, a binder and a carbon-based conductive material.

11. The method according to any one of claims 8 to 10, wherein the forming the preliminary anode active material layer comprises drying and pressing the coated anode slurry before forming the silicon coating.

12. The method according to any one of claims 8 to 11, wherein a surface content of silicon of the anode active material layer measured by an X-ray photoelectric spectroscopy (XPS) is in a range from 3 atom% to 25 atom%, and
a peak intensity ratio defined as a ratio of a second peak intensity corresponding to a peak intensity at a binding energy in a range from 102 eV to 106 eV relative to a first peak intensity corresponding to a peak intensity at a binding energy in a range from 98 eV to 102 eV is in a range from 0.05 to 1.

## Patentansprüche

1. Anode für eine Lithium-Sekundärbatterie, umfassend:
einen Anodenstromabnehmer; und
eine Schicht von aktivem Anodenmaterial, gebildet auf dem Anodenstromabnehmer, wobei die Schicht von aktivem Anodenmaterial Partikel von aktivem Material auf Kohlenstoffbasis umfasst und eine Siliciumbeschichtung auf Oberflächen der Partikel von aktivem Material auf Kohlenstoffbasis gebildet ist,
wobei ein Oberflächengehalt von Silicium der Schicht von aktivem Anodenmaterial, gemessen durch Röntgen-Photoelektronenspektroskopie (XPS), in einem Bereich von 3 Atom-% bis 25 Atom-% liegt, und
ein Peakintensitätsverhältnis, definiert als ein Verhältnis einer zweiten Peakintensität, die einer Peakintensität bei einer Bindungsenergie in einem Bereich von 102 eV bis 106 eV entspricht, relativ zu einer ersten Peakintensität, die einer Peakintensität bei einer Bindungsenergie in einem Bereich von 98 eV bis 102 eV entspricht, in einem Bereich von 0,05 bis 1 liegt,
wobei die erste Peakintensität eine Si-Peakintensität ist und die zweite Peakintensität eine Si-O-Spitze ist, gemessen gemäß der Beschreibung.

2. Anode für eine Lithium-Sekundärbatterie nach Anspruch 1, wobei ein Oberflächengehalt von Silicium der Schicht von aktivem Anodenmaterial, gemessen durch die XPS, in einem Bereich von 3 Atom-% bis 11 Atom-% liegt.

3. Anode für eine Lithium-Sekundärbatterie nach einem der Ansprüche 1 und 2, wobei die Partikel von aktivem Material auf Kohlenstoffbasis in der Schicht von aktivem Anodenmaterial gestapelt sind, so dass Oberflächen von Partikeln von aktivem Material auf Kohlenstoffbasis miteinander Kontakt bilden und die Partikel von aktivem Material auf Kohlenstoffbasis ein poröses Kohlenstoffgerüst bilden.

4. Anode für eine Lithium-Sekundärbatterie nach einem der Ansprüche 1 bis 3, wobei die Partikel von aktivem Material auf Kohlenstoffbasis ein Gemisch von künstlichem Graphit und natürlichem Graphit umfassen.

5. Anode für eine Lithium-Sekundärbatterie nach einem der Ansprüche 1 bis 4, wobei eine Menge an Siliciumbeschichtung, die auf den Partikeln von aktivem Material auf Kohlenstoffbasis gebildet ist, die auf einer Außenfläche der Schicht von aktivem Anodenmaterial freiliegen, größer ist als eine Menge an Siliciumbeschichtung, die auf den Partikeln von aktivem Material auf Kohlenstoffbasis gebildet ist, die an einer Innenseite der Schicht von aktivem Anodenmaterial freiliegen.

6. Anode für eine Lithium-Sekundärbatterie nach einem der Ansprüche 1 bis 5, wobei die Siliciumbeschichtung diskontinuierlich auf den Oberflächen der Partikel von aktivem Material auf Kohlenstoffbasis gebildet ist.

7. Lithium-Sekundärbatterie umfassend:
eine Kathode umfassend Lithium-Übergangsmetall-Mischoxidpartikel als aktives Kathodenmaterial; und
die Anode nach einem der Ansprüche 1 bis 6 der Kathode zugewandt.

8. Verfahren zur Fertigung einer Anode für eine Sekundärbatterie, umfassend:
Bilden einer vorläufigen Schicht von aktivem Anodenmaterial durch Schichten einer Anodenaufschlämmung, die Partikel von aktivem Material auf Kohlenstoffbasis umfasst, auf einen Anodenstromabnehmer; und
Zuführen eines Abscheidungsgases, das eine Siliciumquelle enthält, auf die vorläufige Schicht von aktivem Anodenmaterial, um eine Siliciumbeschichtung auf Oberflächen der Partikel von aktivem Material auf Kohlenstoffbasis zu bilden, wobei ein Anteil der Siliciumquelle in dem Abscheidungsgas in einem Bereich von 3 Vol.-% bis 22 Vol.-% liegt.

9. Verfahren nach Anspruch 8, wobei die Siliciumbeschichtung durch ein chemisches Gasphasenabscheidungsverfahren (CVD) gebildet wird und die Siliciumquelle SiH₄ umfasst.

10. Verfahren nach einem der Ansprüche 8 und 9, wobei die Anodenaufschlämmung ferner ein Lösungsmittel, ein Bindemittel und ein leitfähiges Material auf Kohlenstoffbasis umfasst.

11. Verfahren nach einem der Ansprüche 8 bis 10, wobei das Bilden der vorläufigen Schicht von aktivem Anodenmaterial Trocknen und Pressen der beschichteten Anodenaufschlämmung vor dem Bilden der Siliciumbeschichtung umfasst.

12. Verfahren nach einem der Ansprüche 8 bis 11, wobei ein Oberflächengehalt von Silicium der Schicht von aktivem Anodenmaterial, gemessen durch Röntgen-Photoelektronenspektroskopie (XPS), in einem Bereich von 3 Atom-% bis 25 Atom-% liegt, und
ein Peakintensitätsverhältnis, definiert als ein Verhältnis einer zweiten Peakintensität, die einer Peakintensität bei einer Bindungsenergie in einem Bereich von 102 eV bis 106 eV entspricht, relativ zu einer ersten Peakintensität, die einer Peakintensität bei einer Bindungsenergie in einem Bereich von 98 eV bis 102 eV entspricht, in einem Bereich von 0,05 bis 1 liegt.

## Revendications

1. Anode pour une batterie secondaire au lithium, comprenant :
un collecteur de courant d'anode ; et
une couche de matériau actif d'anode formé sur le collecteur de courant d'anode, la couche de matériau actif d'anode comprenant des particules de matériau actif à base de carbone et un revêtement de silicium formé sur des surfaces des particules de matériau actif à base de carbone,
dans laquelle une teneur en silicium de surface de la couche de matériau actif d'anode mesurée par spectroscopie photoélectrique à rayons X (XPS) est dans une plage de 3 % atomique à 25 % atomique, et
un rapport d'intensité maximale défini comme le rapport d'une deuxième intensité maximale correspondant à une intensité maximale à une énergie de liaison dans une plage de 102 eV à 106 eV par rapport à une première intensité maximale correspondant à une intensité maximale à une énergie de liaison dans une plage de 98 eV à 102 eV est dans une plage de 0,05 à 1,
dans laquelle la première intensité maximale est une intensité maximale de Si, et la deuxième intensité maximale est un pic de Si-O mesuré conformément à la description.

2. Anode pour une batterie secondaire au lithium selon la revendication 1, dans laquelle une teneur en silicium de surface de la couche de matériau actif d'anode mesurée par le XPS est dans une plage de 3 % atomique à 11 % atomique.

3. Anode pour une batterie secondaire au lithium selon l'une quelconque des revendications 1 et 2, dans laquelle les particules de matériau actif à base de carbone sont empilées dans la couche de matériau actif d'anode de sorte que des surfaces des particules de matériau actif à base de carbone soient en contact les unes avec les autres, et les particules de matériau actif à base de carbone forment un échafaudage de carbone poreux.

4. Anode pour une batterie secondaire au lithium selon l'une quelconque des revendications 1 à 3, dans laquelle les particules de matériau actif à base de carbone comprennent un mélange de graphite artificiel et de graphite naturel.

5. Anode pour une batterie secondaire au lithium selon l'une quelconque des revendications 1 à 4, dans laquelle une quantité de revêtement de silicium formé sur les particules de matériau actif à base de carbone exposées sur une surface extérieure de la couche de matériau actif d'anode est supérieure à une quantité de revêtement de silicium formé sur les particules de matériau actif à base de carbone exposées sur un intérieur de la couche de matériau actif d'anode.

6. Anode pour une batterie secondaire au lithium selon l'une quelconque des revendications 1 à 5, dans laquelle le revêtement de silicium est formé de manière discontinue sur les surfaces des particules de matériau actif à base de carbone.

7. Batterie secondaire au lithium, comprenant :
une cathode comprenant des particules d'oxyde composite lithium-métal de transition comme matériau actif de cathode ; et
l'anode selon l'une quelconque des revendications 1 à 6 orientée vers la cathode.

8. Procédé de fabrication d'une anode pour une batterie secondaire, comprenant :
la formation d'une couche préliminaire de matériau actif d'anode par revêtement d'une suspension d'anode comprenant des particules de matériau actif à base de carbone sur un collecteur de courant d'anode ; et
la fourniture d'un gaz de dépôt contenant une source de silicium sur la couche préliminaire de matériau actif d'anode pour former un revêtement de silicium sur des surfaces des particules de matériau actif à base de carbone, un rapport de la source de silicium dans le gaz de dépôt étant dans une plage de 3 % en volume à 22 % en volume.

9. Procédé selon la revendication 8, dans lequel le revêtement de silicium est formé par un procédé de dépôt chimique en phase vapeur (CVD), et la source de silicium comprend du SiH₄.

10. Procédé selon l'une quelconque des revendications 8 et 9, dans lequel la suspension d'anode comprend en outre un solvant, un liant et un matériau conducteur à base de carbone.

11. Procédé selon l'une quelconque des revendications 8 à 10, dans lequel la formation de la couche préliminaire de matériau actif d'anode comprend le séchage et le pressage de la suspension d'anode revêtue avant la formation du revêtement de silicium.

12. Procédé selon l'une quelconque des revendications 8 à 11, dans lequel une teneur en silicium de surface de la couche de matériau actif d'anode mesurée par spectroscopie photoélectrique à rayons X (XPS) est dans une plage de 3 % atomique à 25 % atomique, et
un rapport d'intensité maximale défini comme un rapport d'une deuxième intensité maximale correspondant à une intensité maximale à une énergie de liaison dans une plage de 102 eV à 106 eV par rapport à une première intensité maximale correspondant à une intensité maximale à une énergie de liaison dans une plage de 98 eV à 102 eV est dans une plage de 0,05 à 1.
